# EUROPÄISCHE PATENTSCHRIFT

(11) **EP 0 853 028 B1**
(45) Veröffentlichungstag und Bekanntmachung des Hinweises auf die Patenterteilung: **18.06.2003**
(21) Anmeldenummer: 98100015.1
(22) Anmeldetag: 02.01.1998
(51) Int. Cl.: B60R 22/20

(54) **Verstellvorrichtung für einen Umlenkbeschlag eines Fahrzeug-Sicherheitsgurtsystems**
Adjusting device for the guide loop of a vehicle seat belt system
Dispositif de réglage du renvoi latéral d'un système de ceinture de sécurité de véhicule

(30) Priorität: 14.01.1997 DE 29700549 U
(43) Veröffentlichungstag der Anmeldung: 15.07.1998
(73) Patentinhaber: TRW Occupant Restraint Systems GmbH & Co. KG, 73551 Alfdorf (DE)
(72) Erfinder: Holzapfel, Volker, 66606 St. Wendel (DE); Petzi, Jürgen, 73312 Geislingen-Eybach (DE)
(74) Vertreter: Degwert, Hartmut, Dipl.-Phys.

(56) Entgegenhaltungen:
- DE-U- 29 606 521
- FR-A- 2 590 855
- US-A- 4 373 748

## Beschreibung

Die Erfindung betrifft eine Verstellvorrichtung für einen Umlenkbeschlag eines Fahrzeug-Sicherheitsgurtsystems, mit einer fahrzeugfest angebrachten Schiene und einem Schlitten, der in der Schiene verschiebbar und mit einer Rastvorrichtung versehen ist, mit welcher der Schlitten selektiv an der Schiene festgelegt werden kann, sowie mit wenigstens einem an dem Schlitten angebrachten Sperrelement, das von der Rastvorrichtung funktional unabhängig ist und mittels einer abrupten Verlagerung des Schlittens relativ zum Fahrzeug nach unten aus einer Ruhestellung, in der es an der Schiene nicht angreift, in eine Sperrstellung überführbar ist, in der es an der Schiene angreift und den Schlitten festlegt.

Eine solche Verstellvorrichtung ist aus dem deutschen Gebrauchsmuster 296 06 521 bekannt. Sie dient dazu, den Verlauf des Sicherheitsgurtes optimal an die Größe des jeweiligen Fahrzeuginsassen anzupassen. Probleme bei der Verwendung solcher Verstellvorrichtungen können auftreten, wenn der Schlitten bei einem Unfall nicht vorschriftsmäßig mittels der Rastvorrichtung an der Schiene festgelegt ist. Dieses Problem wird noch verschärft, wenn das Sicherheitsgurtsystem mit einem Gurtstraffer versehen ist, der bei einem Unfall die Gurtlose aus dem Sicherheitsgurtsystem herauszieht. Die dabei auf den Umlenkbeschlag einwirkenden Kräfte können dazu führen, daß die Rastvorrichtung den Schlitten nicht zuverlässig festlegt und daher der Schlitten relativ zum Fahrzeug nach unten verlagert wird, wodurch die Wirkung des Gurtstraffers beeinträchtigt wird. Gemäß dem oben genannten Gebrauchsmuster ist daher vorgesehen, eine Sperrklinke oder eine Sperrplatte an dem Schlitten anzubringen, die bei einer abrupten Verlagerung des Schlittens in der Schiene nach unten aus ihrer Ruhestellung in ihre Sperrstellung verschwenkt wird. In dieser Sperrstellung verkeilt sich eine Kante der Sperrklinke bzw. der Sperrplatte an dem Bodenteil oder einem der Seitenteile der Schiene, wodurch der Schlitten in der Schiene blockiert ist.

Durch die Erfindung wird eine Verstellvorrichtung geschaffen, die kostengünstiger und leichter herzustellen ist als die genannte Verstellvorrichtung aus dem Stand der Technik. Gemäß der Erfindung ist an einer Verstellvorrichtung der eingangs genannten Art vorgesehen, daß das Sperrelement ein Wälzkörper ist, der auf einer an dem Schlitten ausgebildeten Steuerfläche verschiebbar ist. Zusätzlich zur einfacheren Gestaltung ergibt sich als weiterer Vorteil, daß ein Wälzkörper schneller auf eine Verlagerung des Schlittens in der Schiene anspricht als eine Sperrklinke. Dies liegt daran, daß die auf den Wälzkörper einwirkenden Massenträgheitskräfte vollständig in eine Verlagerung des Wälzkörpers relativ zum Schlitten umgesetzt werden, während bei einer Sperrklinke ein Teil der auf diese einwirkenden Massenträgheitskräfte exzentrisch am Schlitten abgestützt werden muß, um das Drehmoment zu erzeugen, mit welchem die Sperrklinke aus ihrer Ruhestellung in ihre Sperrstellung überführt wird.

Weitere Merkmale der Erfindung sind in den Unteransprüchen angegeben.

Die Erfindung wird nachfolgend unter Bezugnahme auf die beigefügten Zeichnungen erläutert. In diesen zeigen:
- Figur 1 eine schematische perspektivische Ansicht einer erfindungsgemäßen Verstellvorrichtung gemäß einer bevorzugten Ausführungsform der Erfindung;
- Figur 2 vergrößert eine Teilansicht einer Variante der in Figur 1 dargestellten Ausführungsform;
- Figur 3 eine schematische Draufsicht auf die in Figur 2 dargestellte Variante der Erfindung im Ruhezustand; und
- Figur 4 eine schematische Draufsicht auf die in Figur 1 dargestellte Ausführungsform der Erfindung im Sperrzustand.

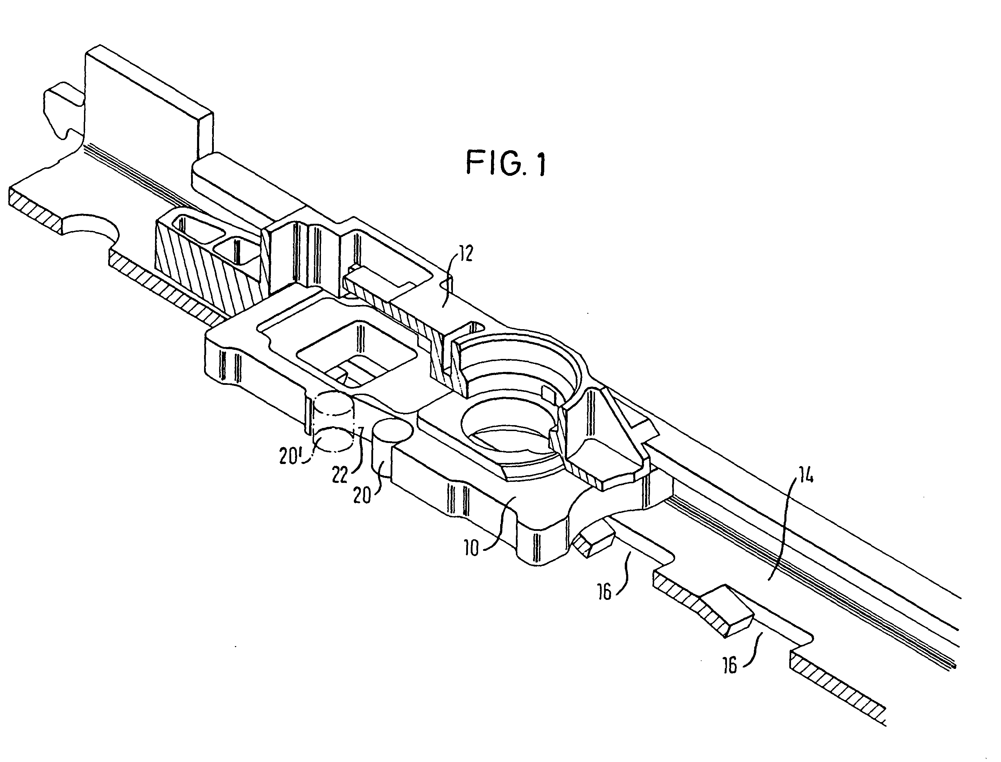

In Figur 1 ist schematisch eine erfindungsgemäße Verstellvorrichtung dargestellt, wobei alle für das Verständnis der Erfindung nicht wesentlichen Funktionsteile weggelassen wurden. Die Verstellvorrichtung weist einen Schlitten 10 auf, der mit einem Gleitstück 12 versehen ist. Der Schlitten 10 und das Gleitstück 12 sind zusammen verschiebbar in einer fahrzeugfest angebrachten Schiene 14 angeordnet, von der nur eine Hälfte dargestellt ist. Der Schlitten 10 ist mit einer (nicht dargestellten) Rastvorrichtung versehen, mit welcher der Schlitten 10 selektiv in schematisch dargestellten Rastöffnungen 16 der Schiene 14 festgelegt werden kann.

Der Schlitten 10 ist mit einer Sperrwalze 20 versehen, die an einer Seite des Schlittens 10 gegenüber einem Seitenteil der Schiene 14 angeordnet ist. Die Sperrwalze 20 ist in einer Ausnehmung im Schlitten 10 angeordnet, wobei ein Wandabschnitt der die Ausnehmung begrenzenden Wandung eine Steuerfläche 22 bildet, die relativ zur Verschieberichtung des Schlittens 10 schräg verläuft. Die Steuerfläche 22 ist bei im Fahrzeug montierten Schlitten 10 so ausgerichtet, daß sie an ihrem unteren Ende einen größeren Abstand von dem gegenüberliegenden Seitenteil 21 der Schiene 14 hat als am oberen Ende.

Die Sperrwalze 20 befindet sich im Ruhezustand in ihrer in Figur 1 dargestellten Ruhestellung, in der sie nicht an der Schiene 14 angreift. Der Schlitten 10 ist frei in der Schiene 14 verschiebbar.

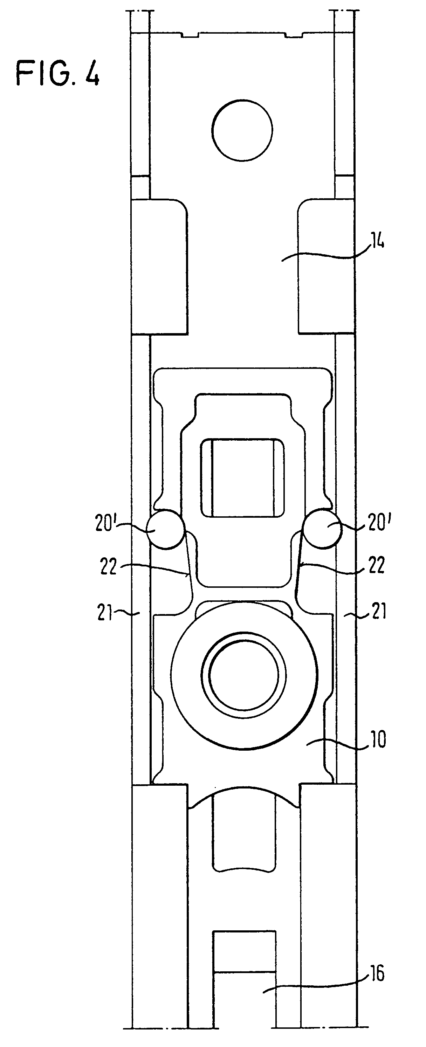

Wenn der Schlitten 10 in der Schiene 14 abrupt relativ zum Fahrzeug nach unten verlagert wird, bleibt die Sperrwalze 20 aufgrund ihrer Massenträgheit gegenüber dem Schlitten 10 zurück. Sie verlagert sich also ausgehend aus ihrer Ruhestellung relativ zum Schlitten in Richtung der mit dem Bezugszeichen 20' dargestellten Stellung. Mit fortschreitender Verlagerung des Schlittens 10 in der Schiene 14 verkeilt sich die Sperrwalze zwischen der Steuerfläche 22 und dem dieser gegenüberliegenden Seitenteil 21 der Schiene 14, wodurch eine weitere Bewegung des Schlittens 10 in der Schiene 14 verhindert ist. Dieser Zustand ist in Figur 4 dargestellt. Die Sperrung mittels der Sperrwalze 20 erfolgt also vollkommen unabhängig von der Rastvorrichtung, mit welcher der Schlitten 10 in den Rastöffnungen 16 festgelegt werden kann, und mit einer extrem kurzen Ansprechzeit innerhalb eines extrem kurzen Sperrweges. Abweichend von der dargestellten symmetrischen Anordnung von jeweils einer Sperrwalze 20 auf jeder Seite des Schlittens 10 kann auch nur eine Sperrwalze 20 verwendet werden.

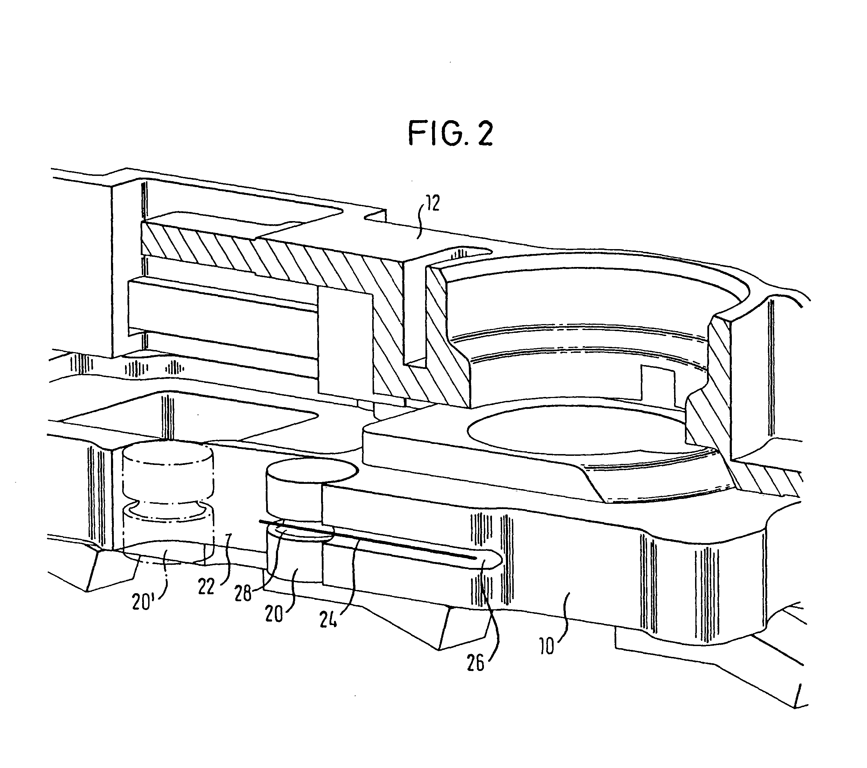

In Figur 2 ist ausschnittsweise eine Variante der in Figur 1 dargestellten Verstellvorrichtung dargestellt. Für aus der Ausführungsform von Figur 1 bekannte Elemente werden dieselben Bezugszeichen verwendet.

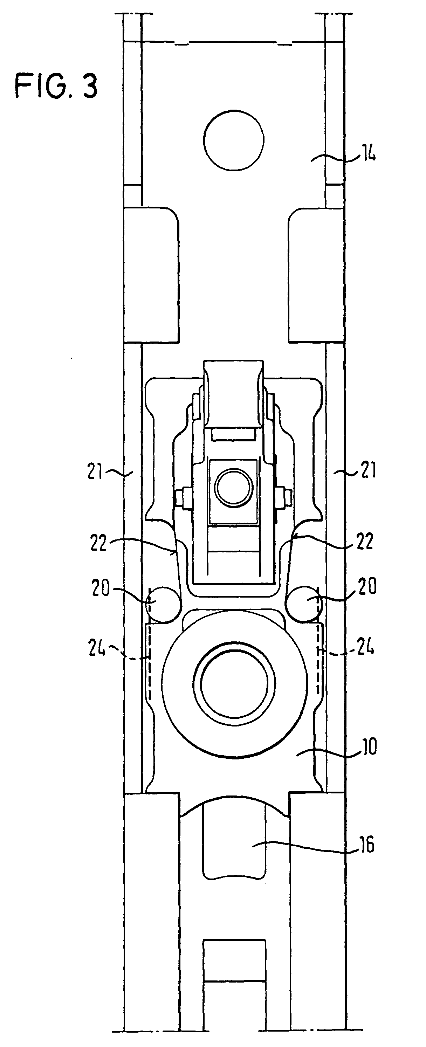

Die in den Figuren 2 und 3 dargestellte Variante der erfindungsgemäßen Verstellvorrichtung unterscheidet sich von der in Figur 1 dargestellten Ausführungsform durch eine Feder 24, welche die Sperrwalze 20 in ihrer Ruhestellung hält. Diese Feder 24 besteht aus einem geradlinigen Federdrahtabschnitt, der in einer Nut 26 verstemmt ist, die am Schlitten 10 ausgebildet ist. Die Feder 24 greift in eine Umfangsnut 28 ein, die mittig zwischen den beiden axialen Enden der Sperrwalze 20 ausgebildet ist. Die Länge der Feder 24 ist so bemessen, daß die Sperrwalze 20 die Feder 24 verläßt, wenn sie sich um einen vorbestimmten Weg in Richtung auf ihre Sperrstellung verlagert hat. Die Funktion der Feder besteht insbesondere darin, Klappergeräusche der Sperrwalze 20 zu verhindern.

## Patentansprüche

1. Verstellvorrichtung für einen Umlenkbeschlag eines Fahrzeug-Sicherheitsgurtsystems, mit einer fahrzeugfest angebrachten Schiene (14) und einem Schlitten (10), der in der Schiene (14) verschiebbar und mit einer Rastvorrichtung versehen ist, mit welcher der Schlitten (10) selektiv an der Schiene (14) festgelegt werden kann, sowie mit wenigstens einem an dem Schlitten angebrachten Sperrelement (20), das von der Rastvorrichtung funktional unabhängig ist und mittels einer abrupten Verlagerung des Schlittens (10) relativ zum Fahrzeug nach unten aus einer Ruhestellung, in der es an der Schiene (14) nicht angreift, in eine Sperrstellung überführbar ist, in der es an der Schiene (14) angreift und den Schlitten (10) an dieser festlegt,
**dadurch gekennzeichnet, daß** das Sperrelement ein Wälzkörper (20) ist, der auf einer an dem Schlitten (10) ausgebildeten Steuerfläche (22) verschiebbar ist.

2. Verstellvorrichtung nach Anspruch 1, **dadurch gekennzeichnet, daß** der Wälzkörper eine Sperrwalze (20) ist.

3. Verstellvorrichtung nach Anspruch 2, **dadurch gekennzeichnet, daß** die Sperrwalze (20) an einer einem Seitenteil der Schiene (14) zugewandten Seite des Schlittens (10) angeordnet ist.

4. Verstellvorrichtung nach einem der Ansprüche 2 und 3, **dadurch gekennzeichnet, daß** die Sperrwalze (20) von einer Feder (24) in ihrer Ruhestellung gehalten ist.

5. Verstellvorrichtung nach Anspruch 4, **dadurch gekennzeichnet, daß** die Feder eine langgestreckte Drahtfeder (24) ist.

6. Verstellvorrichtung nach Anspruch 5, **dadurch gekennzeichnet, daß** die Feder in einer Nut (26) im Schlitten (10) verstemmt ist und daß die Sperrwalze (20) mittig mit einer Umfangsnut (28) versehen ist, in welche die Feder (26) eingreift.

7. Verstellvorrichtung nach Anspruch 6, **dadurch gekennzeichnet, daß** die Feder (26) die Sperrwalze (20) zwischen der Ruhestellung und der Sperrstellung freigibt.

8. Verstellvorrichtung nach einem der vorhergehenden Ansprüche, **dadurch gekennzeichnet, daß** die Steuerfläche (22) eine Rampe ist und der Wälzkörper (20) in der Sperrstellung zwischen der Rampe und einer dieser gegenüberliegenden Fläche der Schiene (14) verkeilt ist.

9. Verstellvorrichtung nach einem der vorhergehenden Ansprüche, **dadurch gekennzeichnet, daß** an dem Schlitten (10) zwei Wälzkörper (20) angeordnet sind, die in der Sperrstellung an einander gegenüberliegenden Stellen der Schiene (14) angreifen.

## Claims

1. An adjustment device for a deflection fitting of a vehicle safety belt system, with a rail (14) mounted so as to be fixed to the vehicle, and with a sliding carriage (10) which is movable in the rail (14) and is provided with a detent device with which the sliding carriage (10) can be selectively secured on the rail (14), and also with at least one locking element (20) mounted on the sliding carriage, which is functionally independent of the detent device and is able to be transferred by means of an abrupt displacement of the sliding carriage (10) relative to the vehicle downwards from a rest position, in which it does not engage on the rail (14), into a locking position, in which it engages on the rail (14) and secures the sliding carriage (10) thereto,
**characterised in that** the locking element is a rolling body (20) which is displaceable on a control surface (22) formed on the sliding carriage (10).

2. The adjustment device according to Claim 1, **characterised in that** the rolling body is a locking roller (20).

3. The adjustment device according to Claim 2, **characterised in that** the locking roller (20) is arranged on a side of the sliding carriage (10) facing a side part of the rail (14).

4. The adjustment device according to one of Claims 2 and 3, **characterised in that** the locking roller (20) is held in its rest position by a spring (24).

5. The adjustment device according to Claim 4, **characterised in that** the spring is an elongated wire spring (24).

6. The adjustment device according to Claim 5, **characterised in that** the spring is caulked in a groove (26) in the sliding carriage (10) and that the locking roller (20) is provided centrally with a circumferential groove (28) into which the spring (24) engages.

7. The adjustment device according to Claim 6, **characterised in that** the spring (24) releases the locking roller (20) between the rest position and the locking position.

8. The adjustment device according to any of the preceding claims, **characterised in that** the control surface (22) is a ramp and the rolling body (20) in the locking position is wedged between the ramp and a surface of the rail (14) lying opposite thereto.

9. The adjustment device according to any of the preceding claims, **characterised in that** two rolling bodies (20) are arranged on the sliding carriage (10), which in the locking position engage on sites of the rail (14) lying opposite each other.

## Revendications

1. Dispositif de réglage d'une ferrure de renvoi d'un système de ceinture de sécurité de véhicule, comprenant un rail (14) solidaire du véhicule et un chariot (10) qui peut coulisser dans le rail (14) et qui comporte un dispositif d'encliquetage permettant de bloquer le chariot (10) sélectivement contre le rail (14), et comprenant au moins un élément d'arrêt (20) qui est disposé contre le chariot et qui est fonctionnellement indépendant du dispositif d'encliquetage et peut, en présence d'un brusque déplacement du chariot (10) vers le bas par rapport au véhicule, passer d'une position de repos, où il n'agit pas sur le rail (14), à une position de blocage où il agit sur le rail (14) et bloque le chariot (10) contre celui-ci, **caractérisé en ce que** l'élément d'arrêt est un corps de révolution (20) qui peut coulisser sur une surface de commande (22) ménagée sur le chariot (10).

2. Dispositif de réglage selon la revendication 1, **caractérisé en ce que** le corps de révolution est un rouleau d'arrêt (20).

3. Dispositif de réglage selon la revendication 2, **caractérisé en ce que** le rouleau d'arrêt (20) est disposé sur un côté du chariot (10) tourné vers une partie latérale du rail (14).

4. Dispositif de réglage selon l'une des revendications 2 et 3, **caractérisé en ce que** le rouleau d'arrêt (20) est maintenu en position de repos par un ressort (24).

5. Dispositif de réglage selon la revendication 4, **caractérisé en ce que** le ressort est un ressort en fil métallique rectiligne (24).

6. Dispositif de réglage selon la revendication 5, **caractérisé en ce que** le ressort est coincé dans une gorge (26) du chariot (10), et **en ce que** le rouleau d'arrêt (20) est pourvu d'une gorge périphérique (28) dans laquelle pénètre le ressort (26).

7. Dispositif de réglage selon la revendication 6, **caractérisé en ce que** le ressort (26) libère le rouleau d'arrêt (20) entre la position de repos et la position de blocage.

8. Dispositif de réglage selon l'une des revendications précédentes, **caractérisé en ce que** la surface de commande (22) est une rampe et, en position de blocage, le corps de révolution (20) est bloqué entre la rampe et une surface du rail (14) située en vis-à-vis de ladite rampe.

9. Dispositif de réglage selon l'une des revendications précédentes, **caractérisé en ce que** deux corps de révolution (20) agissant, en position de blocage, sur des points du rail (14) opposés l'un à l'autre, sont disposés sur le chariot (10).
